## Europäisches Patentamt
## European Patent Office
## Office européen des brevets

(11) Veröffentlichungsnummer: **0 067 963**
**A2**

## (12) EUROPÄISCHE PATENTANMELDUNG

(21) Anmeldenummer: 82104298.3

(22) Anmeldetag: 17.05.82

(51) Int. Cl.³: **G 01 N 21/25**
**G 01 N 21/64**

(30) Priorität: 27.05.81 DE 3121060

(43) Veröffentlichungstag der Anmeldung:
29.12.82 Patentblatt 82/52

(84) Benannte Vertragsstaaten:
AT BE CH DE FR GB IT LI LU NL SE

(71) Anmelder: BOEHRINGER INGELHEIM DIAGNOSTIKA GMBH
Gutenbergstrasse 3 Postfach 1609
D-8046 Garching bei München(DE)

(72) Erfinder: Lang, Kurt M.
Waldstrasse 30
D-6390 Usingen Michelbach(DE)

(74) Vertreter: Laudien, Dieter et al,
Boehringer Ingelheim International GmbH ZA Patente
Postfach 200
D-6507 Ingelheim am Rhein-(DE)

(54) Objektträger als Teil einer Photo- oder Fluorometereinrichtung.

(57) Die Erfindung betrifft einen Objektträger als Teil einer Photo- oder Fluorometereinrichtung.

In der Praxis werden die beiden Geräteeinrichtungen nebeneinander benötigt.

Die Umrüstung von einem Photometer zu einem Fluorometer bzw. umgekehrt ist dabei aufwendig. Dies führte zu der Entwicklung einer Vielzahl lediglich objektgebundener Geräte beider Arten.

Es ist deshalb Ziel der Erfindung, einen Objektträger zu nennen, der durch einfache Manipulation bzw. Umordnung praktisch jede der fallweise infrage stehenden Untersuchungen - unabhängig vom verwendeten Grundgerätetyp - zuläßt.

Die erfindungsgemäße Lösung sieht einen als Blockeinheit 2 ausgebildeten Objektträger vor, der zur Aufnahme von Küvetten 6 oder Teststreifen 7 bestimmt ist, mit einschüben 5 für unterschiedliche Filter ausgerüstet ist und eine die Licht- oder Fluorescenzstrahlung 12, 12' zum Empfänger 10 führende Reflektionsumlenkeinrichtung 9 beinhaltet.

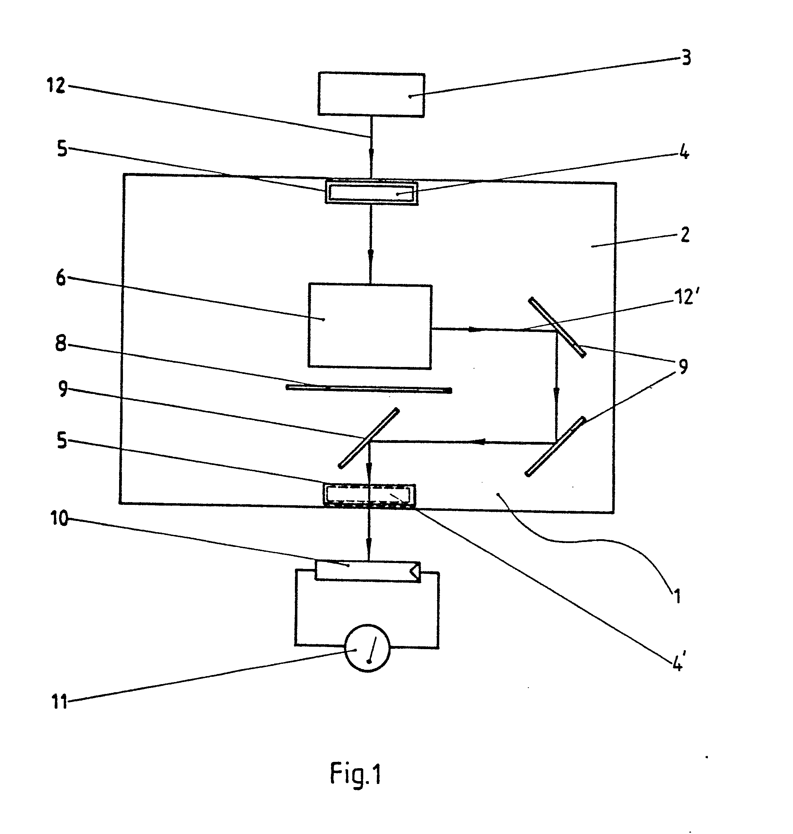

Durch die einfache Umordnungsmoglichkeit an marktgängigen Geräten sind Veränderungen der eigentlichen Grundgerätespezifikationen durchführbar, so daß sich eine größere Bandbreite verschiedener Analysen im wesentlichen einheitlicher Grundgeräte durchführen läßt (siehe Fig. 1).

COMPLETE DOCUMENT

2

Die Erfindung betrifft einen Objektträger als Teil einer Photo- oder Fluorometereinrichtung, ausgebildet zur Aufnahme von zu untersuchenden Proben, deren Licht- oder Strahlungsabsorption gemessen wird, wobei für die Ausübung des Fluorescenzverfahrens zumindest je ein Filter für die Anregung oder je ein Filter für die Zerlegung der Strahlung als unmittelbarer Bestandteil des Fluorometers vorgesehen ist.

Grundsätzlich gibt es Photometer und Fluorometer zur Messung der Extinktionen und Transmissionen als Ein- und Doppelstrahlgeräte.
Im einzelnen wird unterschieden zwischen Photometer für die Untersuchung flüssiger Stoffe und Reflektionsphotometer für die Untersuchung von Teststreifen als spezielle Entwicklungen sowie Reflektionsfluorometer zur Untersuchung flüssiger Stoffe und Reflektionsfluorometer zur Untersuchung von Teststreifen als spezielle Entwicklungen.

Der Umbau von Photometer auf Fluorometer ist bei Ausführungen einzelner Gerätefirmen möglich.
Reflektionsmessungen können jedoch mit einem normalen Photometer ohne große Umbauarbeiten nicht durchgeführt werden.

Aus diesem Grund werden immer mehr Reflektions- bzw. Fluorescenzteststreifen von der chemischen Industrie in Verbindung mit ihren eigenen Produkten und an diese angepaßt, angeboten.

Dies hat zu einer Vielzahl von nur einseitig verwendbaren Geräten geführt, die zwar durch die Bindung an ein bestimmtes Produkt durch den Abnehmer relativ günstig erworben werden können, umgekehrt aber bei Beibehaltung dieser Entwicklungsrichtung zu einer Vielzahl nicht optimal genutzter Geräte, die darüberhinaus noch in zwei Hauptgruppen einzuteilen sind, d.h. in Küvettenträger und Teststreifenträger, führt.

Ergänzend ist noch hinzuzufügen, daß die einseitige Bindung der Geräte an bestimmte Produkte der chemischen bzw. pharmazeutischen Industrie nicht immer zum Angebot der für die exakte Untersuchung bestimmten Geräte führt.

In diesem Zusammenhang sei z.B. an die gegenüber einfachen Photometern wesentlich höhere Meßgenauigkeit der Fluorometer hingewiesen, die jedoch umgekehrt, zumindest fallweise, mit in Verbindung mit einer höheren Geräteempfindlichkeit bzw. Anfälligkeit zu betrachten sind.

Es ist deshalb Aufgabe dieser Erfindung, einen Objektträger nach der eingangs beschriebenen Art zu nennen, der sowohl einem Photometer als auch einem Fluorometer zuordnungsbar ist, und der durch einfache Manipulation, ohne Durchführung größerer Umbauarbeiten, den fallweise durchzuführenden Untersuchungen - unabhängig vom verwendeten Gerätegrundtyp - anpaßbar ist.

Die erfindungsgemäße Lösung dieser Aufgabe sieht vor,
daß die Objektträger jeweils eine optische Blockeinheit gleicher Größe bilden und die Blockeinheit wahlweise zur Aufnahme einer Küvette oder eines Teststreifens als Meßobjekt ausgebildet ist, wobei jeweils in Richtung der Eingangsstrahlung eine Totalblende hinter dem Meßobjekt angeordnet ist,
daß die aus bzw. von dem jeweiligen Meßobjekt in der Regel um 90° abzulenkende Licht- bzw. Fluorescenzstrahlung durch eine weitere mehrfache optische Reflektionsumlenkeinrichtung in Richtung des Strahlungseinganges in den Empfänger führbar ist, und

daß die Blockeinheit mit zumindest einem Einschub zur
Aufnahme von ihren Abmessungen einheitlich dimensionierter Anregungs- oder Zerlegungsfilter für die Durchführung von Fluorescenzstrahlungsabsorptionsmessungen
bzw. zur fallweisen Aufnahme von Normalglas- oder
Quarzglasscheiben für die Durchführung der Lichtabsorptionsmessungen ausgebildet ist.

Durch diese einfachen Unordnungen an marktgängigen Geräten sind Veränderungen der eigentlichen Gerätegrundspezifikationen möglich, so daß sich eine größere Bandbreite von Analysen mit im wesentlichen einheitlichen
Grundgeräten durchführen läßt.

Dies ist im Hinblick auf die immer breiter werdende
Verwendung von Reflektions- und Fluorescenzteststreifen von besonderer Bedeutung.
Die in der optischen Blockeinheit anzuordnende Reflektionsumlenkeinrichtung kann mittels entsprechend
angeordneter Flächenspiegel, Hohlspiegel oder Prismen
erfolgen,
wobei deren Anordnung auf engstem Raum stattfindet, so
daß die Blockeinheit in aller Regel gleiche Größe wie
eine handelsübliche in der klinischen Chemie verwendete
Küvette bzw. Teststreifenführung aufweist oder je nach
Anwendungsbedarf, d.h. Küvetten- oder Teststreifengröße,
in entsprechenden Abmessungen ausgebildet ist.

Da die handelsüblichen Meßgeräte bereits je einen Filter beinhalten, wird vorgeschlagen,
daß die Blockeinheit sowohl in Richtung des Strahlungseintrittes als auch in Richtung des Strahlungsaustritts zumindest jeweils einen oder mehrere Einschübe für Filter aufweist.

Je nach Bauform wird dann der fehlende Filter im Strahlungsein- oder -ausgang des Blockes eingesetzt.

Die Erfindung wird durch die beigefügte schematische Zeichnung einer beispielsweisen Ausführung näher erläutert.

Figur 1 zeigt   eine zur Aufnahme einer Küvette bestimmte, einem Fluorometer zuordnungsbare Blockeinheit.

Figur 2 zeigt   eine zur Aufnahme eines Teststreifens bestimmte, einem Fluorometer zuordnungsbare Blockeinheit.

Figur 3 zeigt   eine zur Aufnahme eines Feststoffstreifens bestimmte, einem Reflektionsphotometer zuordnungsbare Blockeinheit.

Figur 4 zeigt   die beispielsweise Anordnung von Blockeinheiten mit unterschiedlichen Einsätzen in Zuordnung zu einem Fluorometer in einem Vielfach-Probeträger.

Die Einordnung des Probe- bzw. Meßgutes - das entweder in einer Küvette oder auf einem Teststreifen ein- bzw. aufgebracht ist - erfolgt in der optischen Blockeinheit 2 in das Photo- bzw. Fluorometergerät 1.

Bei Ausübung des Fluorescenzverfahrens wird die Strahlung von der Blockeinheit 2 durch ein im Strahlengang angeordnetes Anregungsfilter 3 geleitet und in der Regel durch ein in einem Einschub 5 der Blockeinheit 2 angeordnetes Strahlungszerlegungsfilter 4 auf das Probegut 6 bzw 7 geführt.
Die in Richtung des Strahlungseinganges in die Blockeinheit 2 eintretende Anregungsstrahlung 12 wird durch eine hinter dem Probegut 6 bzw. 7 angeordnete Totalblende 8 am weiteren Durchgang in dieser Richtung gehindert.

Um die aus dem bzw. von dem Probegut 6 oder 7 üblicherweise um 90° zur Richtung der Anregungsstrahlung 12 versetzt austretende Fluorescenzstrahlung 12' wird durch die aus nacheinander angeordneten Spiegeln, Prismen oder dgl. bestehende Umlenkeinrichtungen 9 in Richtung des Strahlungsaustritts aus der Blockeinheit 2 umgelenkt und verläßt diese nach vorherigem Durchtritt durch einen in einen weiteren Einschub 5 angeordneten Fluorescenzstrahlungszerlegungsfilter 4' in Richtung des Empfängers 10, wobei dieser mit einem Anzeigegerät 11 verbunden ist.

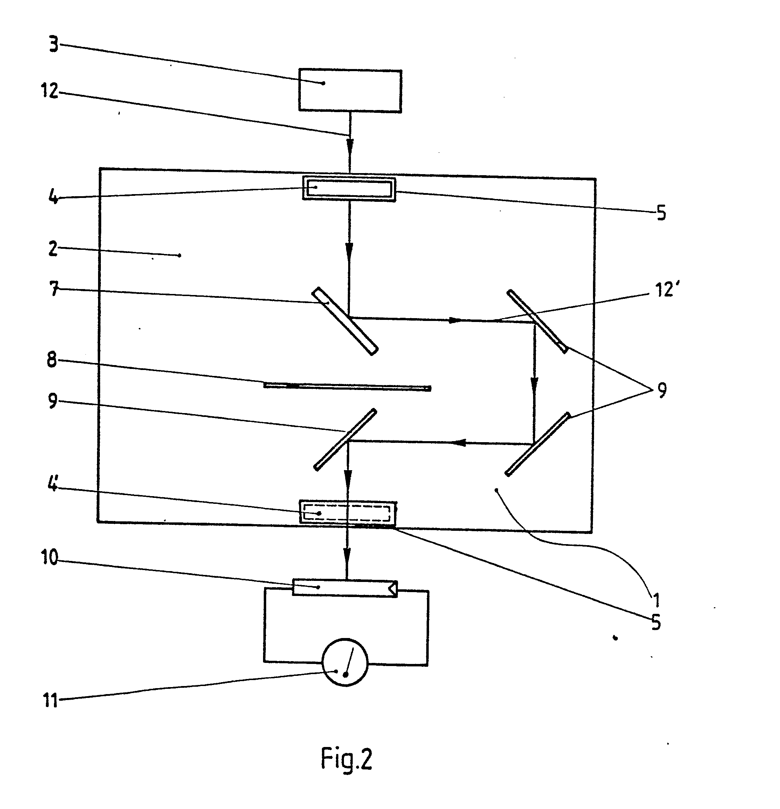

Durch Figur 1 wird dabei ein Fluorometer 1 mit eingebrachter Küvette 6 und durch Figur 2 ein Fluorometer 1 mit eingebrachtem Teststreifen 7 ausgewiesen. Beide Blockeinheiten 2 sind darüberhinaus grundsätzlich einheitlich ausgebildet.

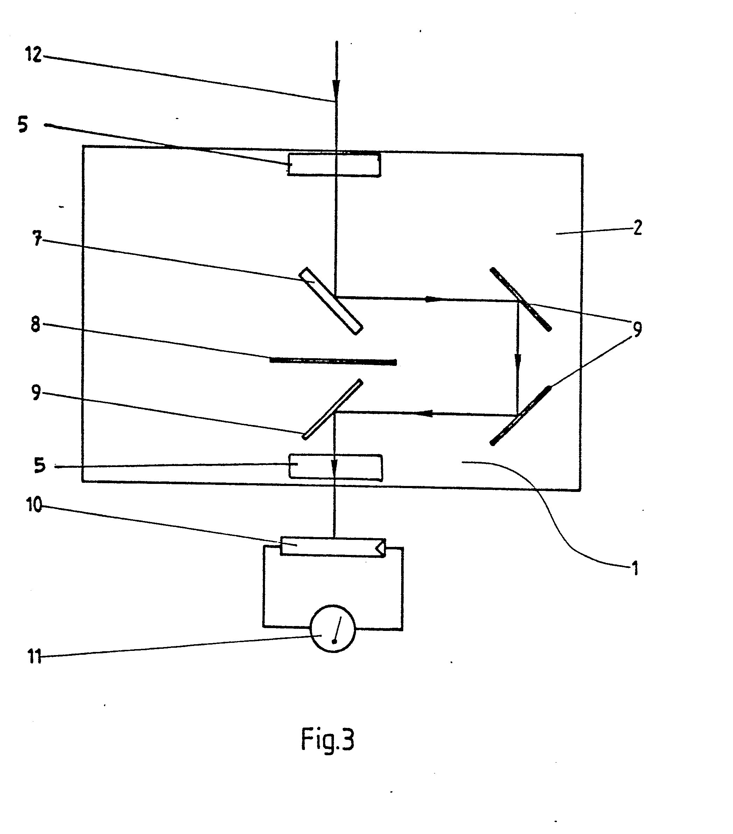

Figur 3 zeigt dieselbe Blockeinheit wie Figur 2, die Zuordnung erfolgt aber in diesem Fall zu einem Photometer 1, so daß das Anregungsfilter 3 und die Zerlegungsfilter 4 und 4' entfallen, wobei letztere durch Quarzglasscheiben ersetzbar sind.

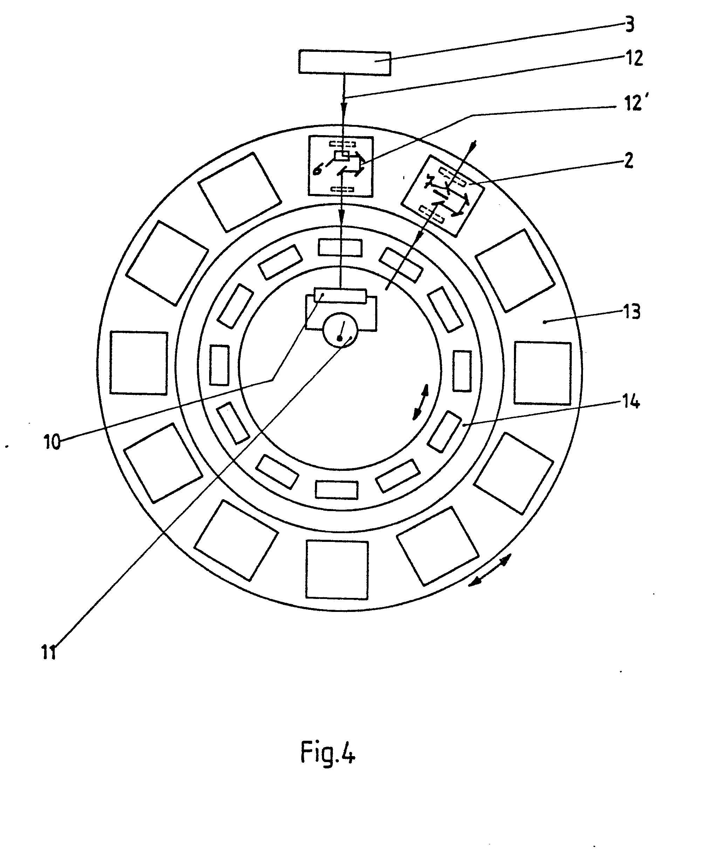

Figur 4 zeigt einen Probeträger der durch einen peripher angeordneten Drehteller 13 für die Aufnahme von Blockeinheiten 2 und einen konzentrisch angeordneten separat drehbaren Ringeinsatz 14 für die mögliche Aufnahme von verschiedenen Filtersystemen gebildet wird.

Innerhalb des Ringes 14 ist der Empfänger 10, einschließlich des Anzeigegerätes 11, installiert,

8

während außerhalb des Trägersystemes 13/14 das, bei Ausübung des Fluorescenzverfahrens, erforderliche Anregungsfilter 3 angeordnet ist.

Patentansprüche

1. Objektträger als Teil einer Photo- oder Fluorometereinrichtung, ausgebildet zur Aufnahme von zu untersuchenden Proben, deren Licht- oder Strahlungsabsorption gemessen wird, wobei für die Ausübung des Fluorescenzverfahrens zumindest je ein Filter für die Anregung oder je ein Filter für die Zerlegung der Strahlung als unmittelbarer Bestandteil des Fluorometers vorgesehen ist, dadurch gekennzeichnet,

d a ß  die Objektträger jeweils eine optische Blockeinheit (2) gleicher Größe bilden und die Blockeinheit (2) wahlweise zur Aufnahme einer Küvette (6) oder eines Teststreifens (7) als Meßobjekt ausgebildet ist, wobei jeweils in Richtung der Eingangsstrahlung eine Totalblende (8) hinter dem Meßobjekt angeordnet ist,

d a ß  die aus bzw. von dem jeweiligen Meßobjekt in der Regel um 90° abzulenkende Licht- bzw. Fluorescenzstrahlung (12) durch eine weitere mehrfache optische Reflektionsumlenkeinrichtung (9) in Richtung des Strahlungseinganges in den Empfänger (10) führbar ist, und

d a ß  die Blockeinheit (2) mit zumindest einem Einschub (5) zur Aufnahme von ihren Abmessungen einheitlicher dimensionierter Anregungsfilter (3) oder Zerlegungsfilter (4 und 4') für die Durchführung von Fluorescenzstrahlungsabsorptionsmessungen bzw. zur fallweisen Aufnahme von Normalglas- oder Quarzglasscheiben für die Durchführung der Lichtabsorptionsmessungen ausgebildet ist.

2. Objektträger nach Anspruch 1, dadurch gekennzeichnet,

d a ß die Blockeinheit (2) sowohl in Richtung des Strahlungseintritts als auch in Richtung des Strahlungsaustritts zumindest jeweils einen oder mehrere Einschübe für Filter (3 und 4) aufweist.

114

Fig.1

2/4

Fig.2

Fig.3

4/4

Fig.4